# EUROPÄISCHE PATENTSCHRIFT

(11) **EP 0 442 067 B1**
(45) Veröffentlichungstag und Bekanntmachung des Hinweises auf die Patenterteilung: **20.01.1993**
(21) Anmeldenummer: 90123423.7
(22) Anmeldetag: 06.12.1990
(51) Int. Cl.: A01B 73/04, A01D 41/14

(54) **Landwirtschafliche Maschine mit einer front- oder heckseitigen Arbeitsvorrichtung**
Agricultural machine with a working implement located in front or back
Machine agricole avec un outil de travail placé du côté avant ou du côté arrière

(30) Priorität: 16.02.1990 DE 4004833
(43) Veröffentlichungstag der Anmeldung: 21.08.1991
(73) Patentinhaber: CLAAS OHG, D-33426 Harsewinkel (DE)
(72) Erfinder: Kleingräber, Karl-Josef, Dipl.-Ing., W-4400 Münster (DE)
(74) Vertreter: Patentanwälte Eisele, Otten & Roth

(56) Entgegenhaltungen:
- EP-A- 0 326 836
- DE-A- 3 830 908
- US-A- 4 191 260

## Beschreibung

Die Erfindung betrifft eine landwirtschaftliche Maschine mit einer front- oder heckseitigen Arbeitsvorrichtung, die aus zwei Vorrichtungsteilen besteht, die zur Querverkürzung für den Straßentransport um eine horizontale in Fahrtrichtung verlaufende Scharnierachse eines Scharniergelenks, welches die beiden Vorrichtungsteile verbindet, mittels eines Schwenkantriebs übereinander geklappt werden. Selbstverständlich ist es dabei auch erforderlich, die zusammengeklappte und dadurch beispielsweise auf die halbe Breite gekürzte Vorrichtung in die Fahrzeugmitte zu rücken, um so die Verkürzung als Verringerung der Fahrzeuggesamtbreite voll nutzen zu können.

Eine Arbeitsvorrichtung dieser Art, nämlich ein Mäh- und/oder Aufnahmevorsatz für einen Mähdrescher ist aus der europäischen Patentanmeldung 326 836 bekannt. Danach ist der eine Vorrichtungsteil, der nicht geklappt wird, am Maschinengestell in Querrichtung verschiebbar geführt. Für die Verschiebebewegung ist ein eigener hydraulischer Antrieb vorgesehen. Er kommt zu dem im Prinzip unabhängig davon arbeitenden Klappantrieb hinzu.

Der Erfindung liegt die Aufgabe zugrunde, einen einfacheren Klappmechanismus vorzuschlagen, der zugleich die zusammengeklappte Arbeitsvorrichtung in die Mitte der Fahrspur der betreffenden Maschine bringt.

Diese Aufgabe wird ausgehend von einer landwirtschaftlichen Maschine der einleitend bezeichneten Art durch die kennzeichnenden Merkmale des Anspruchs 1 gelöst. Eines eigenen Antriebes für die Querbewegung bedarf es dabei nicht. Vielmehr wird der im zusammengeklappten Zustand untere Vorrichtungsteil infolge der gegenseitigen Kopplung durch das Scharniergelenk von dem um 180° schwenkbaren, nach dem Klappen oben liegenden Vorrichtungsteil mitgenommen. Somit ergibt sich eine wesentliche Vereinfachung hinsichtlich der Antriebsanordnung. Das erforderliche Drehschubgelenk hat ebenfalls alle Merkmale konstruktiver Einfachheit und bietet dementsprechend die besten Voraussetzungen zu einem störungsfreien Betrieb. Es besteht aus einer vorzugsweise geradlinigen Führungsbahn, die entweder an dem betreffenden Vorrichtungsteil in dessen Breitenerstreckung oder am Maschinengestell z. B. horizontal angebracht sein kann. In der Führungsbahn bewegt sich ein Schiebestück, das einen zur Schieberichtung senkrechten Bolzen oder eine Lagerhülse aufweist und am Maschinengestell bzw. an dem betreffenden Vorrichtungsteil angebracht ist.

Der genannte Vorrichtungsteil senkt sich beim Klappvorgang ein wenig ab. Arbeitsvorrichtungen an landwirtschaftlichen Maschinen sind jedoch meist höhenverstellbar. Es wird deshalb möglich sein, die maschinengestellseitigen Gelenkteile des Drehgelenks und des Drehschubgelenkes an einem bezüglich des Maschinengestells auf und ab bewegbaren Träger anzubringen, insbesondere an dem üblichen beweglichen Vorrichtungsträger. Dieser kann zum Klappen so weit angehoben werden, daß genügend Bodenfreiheit gegeben ist.

Wird der eine Vorrichtungsteil um 180° umgeklappt, so erfolgt eine Verlagerung des anderen Vorrichtungsteils zur Maschinenmitte hin um den doppelten Abstand des Drehgelenks vom Scharniergelenk. Da die Gesamtbreite der gesamten Arbeitsvorrichtung sich um die Breite des umgeklappten Vorrichtungsteils verkürzt, muß der Querversatz gleich der halben Breite dieses Vorrichtungsteils sein. Es wird daher vorgeschlagen, daß das Drehgelenk vom Scharniergelenk einen Abstand hat, der gleich einem Viertel der Breite des um 180° klappbaren Vorrichtungsteils ist. Die Vorrichtungsteile brauchen nicht gleich lang zu sein.

Das Drehgelenk für den klappbaren Vorrichtungsteil sollte besonders stabil ausgebildet sein, da es während des Klappvorgangs einen Teil des Gewichts auch des anderen Vorrichtungsteils tragen muß. Es kommen alle geeigneten Antriebe in Betracht, sowohl solche mit Hubkolben und Hebeln als auch reine Drehantriebe.

Ein bevorzugtes Anwendungsgebiet für die vorgeschlagene Klappanordnung sind selbstfahrende Mähdrescher, deren Schneidwerk und Aufnahmevorrichtung frontseitig vorgebaut sind und bei denen Gesamtarbeitsbreiten angestrebt werden, die wesentlich über der zulässigen Straßentransportbreite liegen. Die Schneidwerke sitzen gewöhnlich an einem auf und ab schwenkbaren Schrägförderer. Dieser eignet sich daher besonders zur Anbringung der maschinenseitigen Teile des Drehgelenks und des Drehschubgelenks, und zwar vorzugsweise in gleicher Höhe.

Ein Ausführungsbeispiel der Erfindung wird nachfolgend anhand der Zeichnung erläutert, welche die Frontansicht eines Mähdreschers und dessen zweiteiliges Schneidwerk in verschiedenen Stellungen darstellt. Im einzelnen zeigt
Fig. 1 die Arbeitsstellung,
Fig. 2 den Beginn des Klappvorgangs bei angehobenem Schrägförderer,
Fig. 3 eine weitere Zwischenstellung des Klappvorgangs in kleinerem Maßstab,
Fig. 4 eine Zwischenstellung kurz vor Beendigung des Klappvorgangs,
Fig. 5 die Endstellung nach dem Klappvorgang und
Fig. 6 die Transportstellung mit abgesenktem Schrägförderer.

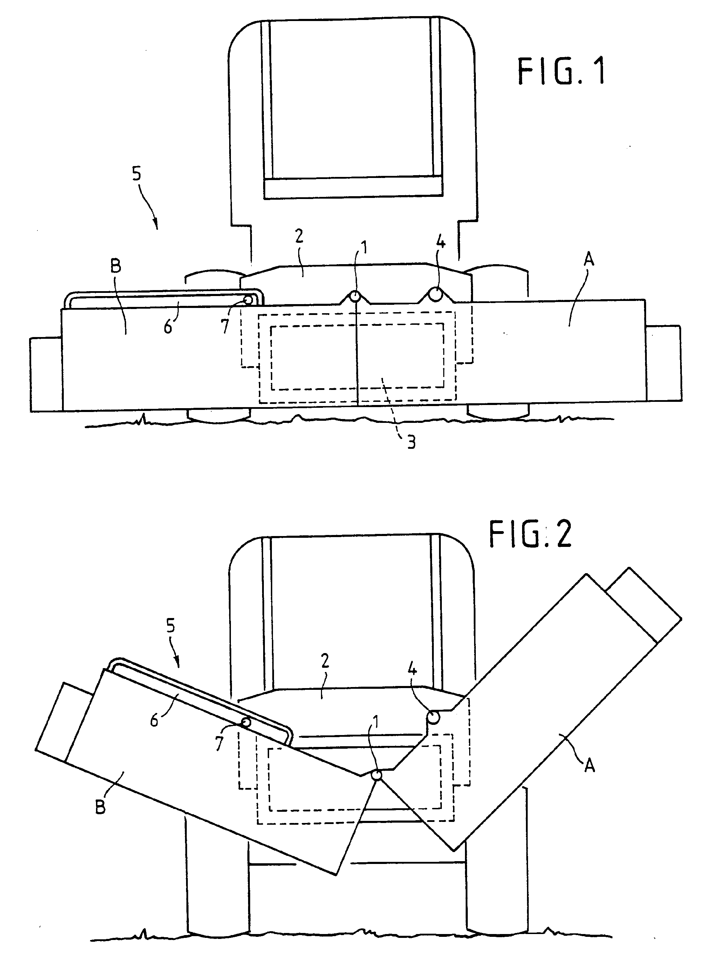

Gemäß Fig. 1 besteht das Schneidwerk des Mähdreschers, welches auch die Aufnahmevorrichtung umfaßt, aus den beiden Schneidwerkteilen A und B. An deren Oberkante befindet sich das Scharniergelenk 1, welches eine in Fahrtrichtung weisende, etwa horizontale Achse hat und die beiden Schneidwerkteile A und B klappbar miteinander verbindet. Die Schneidvorrichtung ist an einem Träger 2 angebracht, der höhenverstellbar ist und mit einem Schrägförderer, dessen Aufnahmeschacht mit 3 bezeichnet ist, eine Einheit bildet. Mit diesem Träger 2 ist der Schneidwerkteil A durch ein Drehgelenk 4 verbunden, dessen Achse ebenfalls in Fahrtrichtung weist. Mittels eines nicht dargestellten Schwenkantriebes kann der Schneidwerkteil A um die Achse dieses Drehgelenks 4 um 180° geschwenkt werden. Der andere Schneidwerkteil B ist mit dem Träger 2 durch ein Drehschubgelenk 5 verbunden. Dieses besteht aus einem längs seiner Oberkante an dem Schneidwerkteil B angebrachten Führungsschlitz 6, in welchem sich - aus der schematischen Darstellung nicht ersichtlich - ein Schiebestück hin und her bewegen kann. Dieses Schiebestück ist mittels eines Lagers um eine ebenfalls in Fahrtrichtung weisende Drehachse 7 an dem Träger 2 drehbar gelagert.

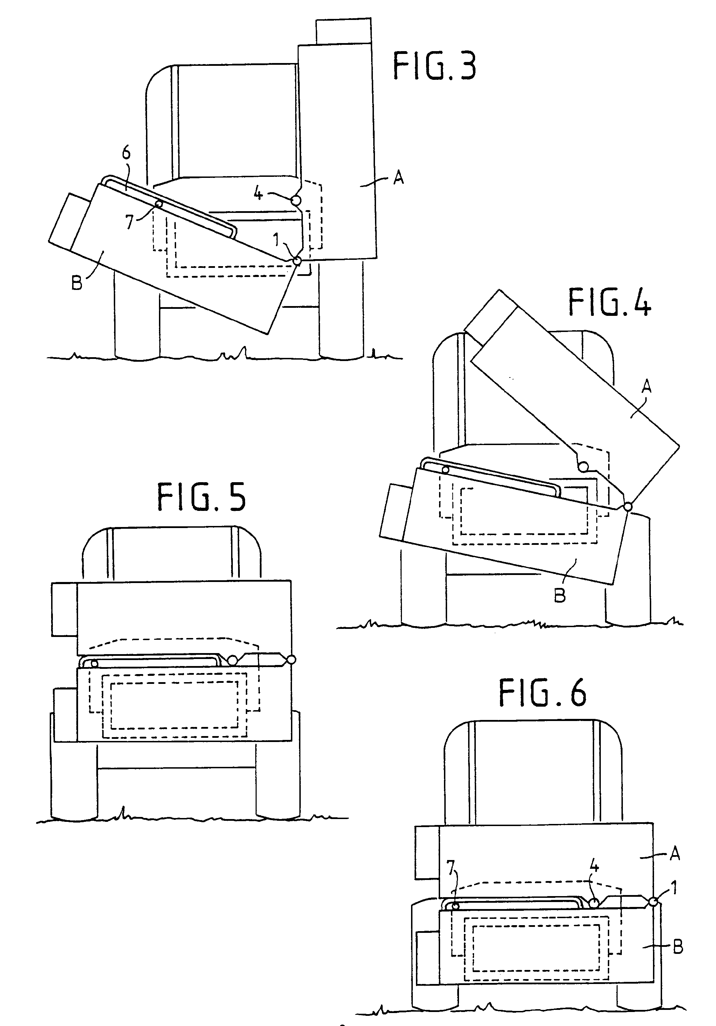

Um die Betriebsbelastungen aufnehmen zu können, werden die Schneidwerkteile A und B in der Arbeitsstellung nach Fig. 1 vorzugsweise mit zusätzlichen Befestigungsmitteln am Maschinengestell des Mähdreschers befestigt. Diese werden vor Beginn des Klappvorgangs gelöst. Außerdem wird der Träger 2 in einem für den Klappvorgang ausreichendem Maße angehoben, wie dies Fig. 2 zeigt. Der Schwenkantrieb setzt sich in Bewegung und dreht den Schneidwerkteil A um die Achse des Drehgelenks 4 nach links. Da die beiden Schneidwerkteile durch das Scharniergelenk 1 miteinander verbunden sind, wird der Schneidwerkteil B nach rechts unten mitgezogen, wobei sein Führungsschlitz 6 über das am Träger 2 drehbare Schiebestück gleitet. Während des fortgesetzten Klappvorgangs steht der Schneidwerkteil A gemäß Fig. 3 senkrecht. In dieser Stellung erreicht die untere Ecke des Schneidwerkteils B ihre tiefste Stellung. Über die Zwischenstellung nach Fig. 4 kommen die Schneidwerkteile schließlich in die Endstellung nach Fig. 5, in welcher sie etwa in Spurmitte horizontal und parallel übereinander liegen. Der Schneidwerkteil B hat sich dabei selbsttätig aus seiner nach links hinausragenden Arbeitsstellung in die Mitte herein bewegt. Schließlich wird zum Straßentransport der Träger 2 mit den übereinander geklappten Schneidwerkteilen bis auf die erforderliche Bodenfreiheit abgesenkt, wodurch auch der Fahrer eine bessere Übersicht erhält. Auch für den Transport können zusätzliche Mittel zur Verriegelung der Schneidwerkteile am Maschinengestell vorgesehen sein.

## Patentansprüche

1. Landwirtschaftliche Maschine mit einer front- oder heckseitigen Arbeitsvorrichtung, die aus zwei Vorrichtungsteilen (A, B) besteht, die zur Querverkürzung für den Straßentransport um eine horizontale in Fahrtrichtung verlaufende Scharnierachse eines Scharniergelenks (1), welches die beiden Vorrichtungsteile (A, B) verbindet, mittels eines Schwenkantriebs übereinander geklappt werden, dadurch gekennzeichnet, daß zum Verbinden mit dem Maschinengestell an dem einen Vorrichtungsteil (A) in Arbeitsstellung oberhalb desselben ein Drehgelenk (4) mit zum Scharniergelenk (1) paralleler Achse angeordnet ist und daß der Schwenkantrieb vorgesehen ist, um diesen Vorrichtungsteil bezüglich des Maschinengestells um die Achse dieses Drehgelenks (4) um 180° zu schwenken, und daß zum Verbinden des anderen Vorrichtungsteils (B) mit dem Maschinengestell an diesem Vorrichtungsteil (B) oberhalb desselben ein Drehschubgelenk (5) angeordnet ist, dessen Drehachse (7) sich parallel zum Scharniergelenk (1) und dessen vorzugsweise geradlinige Führungsbahn (6) sich im wesentlichen in Breitenrichtung erstreckt, so daß dieser Vorrichtungsteil (B), mitgenommen von dem anderen Vorrichtungsteil (A) infolge der gegenseitigen Kopplung durch das Scharniergelenk (1), bezüglich des Maschinengestells um die Drehachse (7) schwenken und sich senkrecht zu dieser verschieben kann.

2. Maschine nach Anspruch 1, dadurch gekennzeichnet, daß die maschinengestellseitigen Gelenkteile des Drehgelenks (4) und des Drehschubgelenks (5) an einem bezüglich des Maschinengestells auf und ab bewegbaren Träger (2) angebracht sind.

3. Maschine nach Anspruch 1, dadurch gekennzeichnet, daß das Drehgelenk (4) des um 180° schwenkbaren Vorrichtungsteils (A) vom Scharniergelenk (1) einen Abstand hat, der gleich einem Viertel der Breite dieses Vorrichtungsteils (A) ist.

4. Maschine nach Anspruch 1, dadurch gekennzeichnet, daß die Führungsbahn (6) an dem betreffenden Vorrichtungsteil (B) in dessen Breitenerstreckung angeordnet ist.

5. Selbstfahrender Mähdrescher nach Anspruch 2, dadurch gekennzeichnet, daß dessen Schneidwerk die Arbeitsvorrichtung und dessen Schrägförderer den auf und ab bewegbaren Träger bilden.

## Claims

1. Agricultural machine with a front or rear working arrangement which consists of two arrangement parts (A, B) which, for reducing the transverse extension for road transport, can be folded one on top of the other by means of a swivelling drive around a horizontal hinge axis, extending horizontally in the direction of travel, of a hinge (1) which connects the two arrangement parts (A, B), characterized in that, for connection with the chassis of the machine, a swivel joint (4) with axis parallel with the hinge (1) is mounted on the one arrangement part (A) in working position over the chassis, and in that the swivelling drive is designed to swivel this arrangement part relative to the chassis of the machine around the axis of this swivel joint (4) by 180°, and in that, to connect the other arrangement part (B) with the machine chassis, a turning and sliding joint (5) is mounted on the said arrangement part (B) above the chassis, its rotating axis (7) extending parallel with the hinge, and its preferably rectilinear guide path (6) extending substantially in the direction of the width, so that this arrangement part (B), taken along by the other arrangement part (A) as a consequence of the mutual coupling by means of the hinge (1), is able to swivel relative to the chassis of the machine around the rotating axis (7) and move perpendicularly to the latter.

2. Machine according to claim 1, characterized in that the hinging parts of the hinge (4) and of the turning and sliding joint (5) on the machine chassis side are mounted on a support (2) able to be moved up and down relative to the chassis.

3. Machine according to claim 1, characterized in that the swivel joint (4) of the arrangement part (A) swivellable around 180° is at a distance from the hinge (1) which is equal to one quarter of the width of this arrangement part (A).

4. Machine according to claim 1, characterized in that the guide path (6) is provided on the arrangement part (B) concerned in the width extension of the latter.

5. Self-propelled combine harvester according to claim 2, characterized in that its cutting unit forms the working arrangement, and its slope conveyor forms the support which can be moved up and down.

## Revendications

1. Machine agricole, comportant un dispositif de travail placé du côté avant ou du côté arrière, qui est constitué de deux parties de dispositif (A,B), qui, pour le raccourcissement transversal pour le transport routier, sont repliées l'une sur l'autre, au moyen d'un entraînement pivotant, autour d'un axe horizontal, s'étendant dans la direction de marche, d'une articulation à charnière (1), caractérisée en ce qu'une articulation tournante (4) à axe parallèle à l'articulation à charnière (1) est agencée, pour la liaison au bâti de machine, sur une partie du dispositif (A) dans la position de travail au-dessus de celle-ci, et en ce que l'entraînement pivotant est prévu pour faire pivoter de 180° cette partie du dispositif, relativement au bâti de machine, autour de l'axe de cette articulation tournante (4), et en ce que, pour la liaison de l'autre partie du dispositif (B) au bâti de machine, un joint articulé (5) est agencé sur cette partie du dispositif (B) au-dessus de celle-ci, joint dont l'axe de rotation (7) s'étend parallèlement à l'articulation à charnière (1) et dont la glissière (6), de préférence rectiligne, s'étend sensiblement dans le sens de la largeur, de sorte que cette partie du dispositif (B), entraînée par l'autre partie du dispositif (A) par suite du couplage mutuel par l'articulation à charnière (1), peut pivoter relativement au bâti de machine autour de l'axe de rotation (7) et peut se déplacer perpendiculairement à celui-ci.

2. Machine selon la revendication 1,
caractérisée en ce que les parties de l'articulation tournante (4) et du joint articulé (5), du côté du bâti de machine, sont disposées sur un support (2) pouvant monter et descendre relativement au bâti de machine.

3. Machine selon la revendication 1,
caractérisé en ce que l'articulation tournante (4) de la partie du dispositif (A), pouvant pivoter de 180°, présente un écartement de l'articulation à charnière (1), qui est égal au quart de la largeur de cette partie (A) du dispositif.

4. Machine selon la revendication 1,
caractérisé en ce que la glissière (6) est agencée sur la partie (B) correspondante du dispositif sur sa largeur.

5. Moissonneuse-batteuse automotrice selon la revendication 2,
caractérisée en ce que son outil de coupe forme le dispositif de travail et son transporteur incliné forme le support pouvant monter et descendre.
